# EUROPÄISCHE PATENTSCHRIFT

(11) **EP 0 690 768 B1**
(45) Veröffentlichungstag und Bekanntmachung des Hinweises auf die Patenterteilung: **22.07.1998**
(21) Anmeldenummer: 94910332.9
(22) Anmeldetag: 15.03.1994
(51) Int. Cl.: B24B 39/00, C21D 7/04, B21H 7/16, B21H 5/02

(54) **VERFAHREN ZUM FESTWALZEN EINES BAUTEILS**
PROCESS FOR HARD-ROLLING A COMPONENT
PROCEDE DE LAMINAGE DUR D'UNE PIECE

(30) Priorität: 22.03.1993 DE 4309176
(43) Veröffentlichungstag der Anmeldung: 10.01.1996
(73) Patentinhaber: SIEMENS AKTIENGESELLSCHAFT, 80333 München (DE)
(72) Erfinder: SEEGER, Horst, D-45468 Mülheim a. d. Ruhr (DE); THIELE, Dieter, D-45470 Mülheim a. d. Ruhr (DE); WAGNER, Hans, D-47447 Moers (DE)
(86) Internationale Anmeldenummer: DE9400277
(87) Internationale Veröffentlichungsnummer: WO9421427

(56) Entgegenhaltungen:
- FR-A- 2 486 432
- US-A- 4 448 053
- STAHL UND EISEN, Bd.110, Nr.14, Juli 1984, DüSSELDORF, DE Seiten 657 - 660 EBERHARD VON FINCKENSTEIN & ULRICH PRECKEL 'Eigenspannungen beim Oberflächen-Feinwalzen'
- PATENT ABSTRACTS OF JAPAN vol. 3, no. 68 (C-48) 13. Juni 1979 & JP,A,54 041 253 (MITSUBISHI JUKOGYO K.K.) 4. Februar 1979
- SOVIET INVENTIONS ILLUSTRATED Section PQ, Week 8719, 20. Mai 1987 Derwent Publications Ltd., London, GB; Class P52, AN 87-134536 'Device for straigthening roots of gear teeth.' & SU,A,1 258 577 (AS BELO RELIABILITY) 23. September 1986

## Beschreibung

Die Erfindung betrifft ein Verfahren zum Festwalzen eines entlang einer Belastungsachse zu belastenden Bauteils in einer etwa senkrecht zu der Belastungsachse verlaufenden Kerbe, wobei die Kerbe über mehrere, entlang der Belastungsachse nebeneinanderliegende und etwa senkrecht zur Belastungsachse ausgerichtete Bahnen festgewalzt wird, wobei jede Bahn die Kerbe nur zu einem Teil erfaßt und wobei in dem Bauteil unterhalb der Kerbe Druckeigenspannungen erzeugt werden.

Die Erfindung bezieht sich insbesondere auf das Festwalzen von metallischen Bauteilen wie Turbinenschaufeln, wobei eine Kerbe, in der ein solches Bauteil festgewalzt werden soll, insbesondere eine Haltenut zur Halterung des Bauteils ist. Insbesondere eine Turbinenschaufel, die für einen Turbinenrotor bestimmt ist und dementsprechend großen betrieblichen Fliehkraftbelastungen ausgesetzt wird, hat vielfach mehrere Haltenuten, die entlang der Belastungsachse in zwei zueinander symmetrischen Reihen angeordnet sind und in die entsprechende Haltevorrichtungen des Turbinenrotors eingreifen.

Das Festwalzen von Bauteilen, welches zusammen mit dem oberflächenglättenden Glattwalzen und dem geringfügig formverändernden Maßwalzen unter dem Allgemeinbegriff "Oberflachen-Feinwalzen" zusammengefaßt wird, ist in dem Buch "Festwalzen und Glattwalzen zur Festigkeitssteigerung von Bauteilen" des Deutschen Verbandes für Materialprüfung e.V. eingehend erläutert. In diesem Buch sind Niederschriften oder Manuskripte von Vorträgen, die auf einer 1982 abgehaltenen Achten Sitzung des "Arbeitskreises Betriebsfestigkeit" gehalten wurden, zusammengefaßt. Vorliegend wird im einzelnen Bezug genommen auf die Vorträge "Ermüdungseigenschaften festgewalzter Probestäbe" von B. Fuchsbauer, Seite 23 ff., und "Eigenspannungsausbildung und Dauerfestigkeit von festgewalzten CK 45-Proben" von R. Prümmer und R. Zeller, Seite 63 ff. Demnach ist das Festwalzen, welches üblicherweise mit kleinen balligen Rollen aus Hartmetall durchgeführt wird, eine deformierende Oberflächenbearbeitung mit dem Ziel, die Dauerhaltbarkeit, insbesondere die Haltbarkeit unter Schwingungsrißkorrosionsangriffen, zu erhöhen. Beim Festwalzen ist die Oberflächendeformation zum Teil elastisch und zum Teil plastisch; sie führt einerseits zur Steigerung der Härte des bearbeiteten Werkstoffs an der Oberfläche sowie in oberflächennahen Schichten und andererseits zur Ausbildung von Druckeigenspannungen unter der Oberfläche. Diese Druckeigenspannungen sind unter Umständen geeignet, Rißwachstum von der Oberfläche in den Werkstoff hinein zu unterbinden. Hieraus ergibt sich die Eignung von Druckeigenspannungen, um Schwingungsrißkorrosion an einem Werkstoff entgegenzutreten.

Die Vermeidung einer Gefährdung durch Schwingungsrißkorrosion ist ein wichtiger Aspekt bei der Auslegung und Herstellung einer Turbinenschaufel für eine Gasturbine oder eine Dampfturbine.

Ein Verfahren zum Festwalzen der in der Einleitung genannten Art geht aus der DE-C-40 15 205 hervor, wobei das Bauteil, das eine mit Festwalzen zu behandelnde Kerbe aufweist, eine Turbinenschaufel ist. Der Hauptaugenmerk liegt dabei nicht auf einer Ausgestaltung des Festwalzens selbst, sondern auf der Angabe eines zum Festwalzen bestimmter Kerben oder Nuten geeigneten Werkzeugs.

Auch die DE-C-689 912 betrifft den Vorgang des Festwalzens, wobei allerdings nicht ein Bauteil der in der Einleitung genannten Art festgewalzt wird, sondern ein flacher Kreisring, der eine Rollbahn eines Axial-Wälzlagers darstellen soll.

Die DE-A-36 01 541 betrifft die Verbesserung der Oberflächengüte einer Bohrung in einem Werkstück durch Festwalzen der Oberfläche der Bohrung mit rollenden Kugeln. Das Festwalzen erfolgt bevorzugtermaßen derart, daß die Kugeln entlang der Achse der Bohrung geführt werden und die Bohrung somit auf vielzähligen Bahnen, die einander benachbart sind und deren jede etwa parallel zur Achse ausgerichtet ist, überrollen. Hierdurch können in dem Werkstück Druckeigenspannungen erzeugt werden, die zu einem wesentglichen Anteil tangential bezüglich der Achse ausgerichtet sind.

Das aus dem Stand der Technik bekannte Festwalzen einer Kerbe in einem Bauteil erfolgt stets in der Weise, daß eine ballige Rolle mit einer Form, die der Form der Kerbe angepaßt ist, mit entsprechender Anpreßkraft durch die Kerbe gerollt wird. Es hat sich gezeigt, daß dabei Druckeigenspannungen gebildet werden, die anisotrop und zum überwiegenden Teil in Längsrichtung der Kerbe gerichtet sind. Dadurch sind diese Druckeigenspannungen nur bedingt geeignet, den betrieblichen Belastungen von Bauteilen der in der Einleitung genannten Art, insbesondere Turbinenschaufeln, wobei die Belastung entlang einer Belastungsachse quer zur Kerbe erfolgt, entgegenzutreten.

In diesem Sinne beruht die Erfindung auf der Aufgabe, das in der Einleitung genannte und aus DE-C-40 15 205 bekannte Verfahren zum Festwalzen eines entlang einer Belastungsachse zu belastenden Bauteils in einer etwa senkrecht zu der Belastungsachse verlaufenden Kerbe weiterzubilden, so daß eine im Hinblick auf die zu erwartenden Belastungen bessere Ausrichtung der Druckeigenspannungen erreicht wird.

Das zur Lösung dieser Aufgabe erfundene Verfahren zeichnet sich durch die Kombination von Merkmalen nach Anspruch 1 aus.

Die Erfindung geht aus von der Erkenntnis, daß durch ein Festwalzen auf nebeneinanderliegenden, die Kerbe jeweils nur teilweise erfassenden Bahnen ein Umklappen der Druckeigenspannungen um 90° erreichbar ist, so daß die anfänglich etwa senkrecht zur Belastungsachse ausgerichteten Druckeigenspannungen nach vollständigem Festwalzen zur Belastungsachse hin ausgerichtet und damit in besonderem Maße geeignet sind, zum Auffangen von Belastungen, die entlang der Belastungsachse erfolgen. So kann, insbesondere bei einer Turbinenschaufel, Rißwachstum und Schwingungsrißkorrosion in der Kerbe wirksam entgegengetreten werden.

Erfindungsgemäß sind die Bahnen zum Festwalzen der Kerbe so gelegt, daß sie einander überlappen. Auf diese Weise können Wechselwirkungen zwischen bereits erzeugten Druckeigenspannungen und Druckeigenspannungen, die bei einem neuen Walzvorgang erzeugt werden, zur Förderung des Entstehens der gewünschten Druckeigenspannungen nach Vollendung des Festwalzens ausgenutzt werden. Auch wird bereits beim Festwalzen eine weitgehend glatte Oberfläche der Kerbe erzielt.

Die Angabe, daß die Druckeigenspannungen "unterhalb der Kerbe" gewisse Eigenschaften haben sollen, bedeutet auch, daß ein kleiner Oberflächenbereich in der Kerbe, der sich von der Oberfläche bis zu einer geringen Tiefe, die bei einem aus Stahl bestehenden Werkstück typisch etwa 0,2 mm beträgt, außer Betracht bleiben soll. Dies erklärt sich in erster Linie daraus, daß der Oberflächenbereich anders als tiefer liegende Schichten durch die Bildung und Überwalzung von Graten einer besonders intensiven Knetung unterzogen wird, die die Materialeigenschaften des Oberflächenbereichs in kaum erfaßbarer Weise beeinflußt und bestimmt. Hauptaugenmerk liegt daher auf der Beeinflussung von Schichten unterhalb des Oberflächenbereichs, was allerdings unter dem Aspekt der Vermeidung von Rißwachstum ausreichend ist.

Mit besonderem Vorzug erfolgt das Festwalzen der Kerbe des Bauteils derart, daß die axialen Komponenten der Druckeigenspannungen bis in eine Tiefe von 0,6 mm etwa 50 % größer als die tangentialen Komponenten der Druckeigenspannungen sind.

Mit weiterem Vorzug haben die axialen Komponenten der Druckeigenspannungen Beträge von etwa 500 Newton/mm², und dies bis in eine Tiefe von 1,5 mm.

Jede der vorgenannten Maßnahmen, und vorzugsweise beide Maßnahmen in Kombination, sichern Druckeigenspannungen mit Eigenschaften, die insbesondere bei einer Turbinenschaufel zur Vorbeugung von Rißbildung und Schwingungsrißkorrosion unter den zu erwartenden Beanspruchungen wirksam sind.

Vorzugsweise erfaßt jede Bahn die Kerbe zu höchstens einem Sechstel, so daß in der Tat eine größere Vielzahl von Walzvorgängen erforderlich ist, um die Kerbe vollständig festzuwalzen. Auch dies ist dem Ziel der Erzeugung der gewünschten Druckeigenspannungen in besonderer Weise förderlich.

Das Festwalzen erfolgt mit weiterem Vorzug derart, daß jede Bahn überrollt wird mit einer balligen Rolle, die einen maximalen Balligkeitsradius hat, der wesentlich kleiner als der minimale Krümmungsradius der Kerbe ist. Zum Festwalzen der Kerbe kann dabei eine einzige Rolle benutzt werden, die nacheinander über alle Bahnen geführt wird; es ist aber auch denkbar, zum Festwalzen der Kerbe Anordnungen mit mehreren Rollen der genannten Art zu verwenden. Die letztgenannte Maßnahme wird bevorzugtermaßen ergriffen zum Festwalzen einer Kerbe mit relativ kompliziertem Querschnitt.

Vorzugsweise wird die Kerbe nach dem Festwalzen zusätzlich glattgewalzt, was erfolgen kann mit einer einzigen Rolle, die die Kerbe im gesamten festgewalzen Bereich erfaßt und deren Form der Form der Kerbe hinreichend angepaßt ist. Durch das Glattwalzen können kleinere Unregelmäßigkeiten der Oberfläche des Bauteils in der Kerbe beseitigt werden, wodurch die Qualität der Oberfläche, insbesondere im Hinblick auf ihre Korrosionsfestigkeit, nochmals verbessert werden kann.

Das Glattwalzen erfolgt vorzugsweise mit einer Rolle, welche eine Mehrzahl von Bahnen gleichzeitig erfaßt. So können insbesondere Grate, die sich eventuell beim Festwalzen zwischen einander benachbarten Bahnen gebildet haben, beseitigt werden, und es ist mit einfachen Mitteln sichergestellt, daß die Kraft, mit der die Rolle beim Glattwalzen auf die Kerbe einwirkt, in einem angemessenen Verhältnis steht zu der beim Festwalzen einwirkenden Kraft. Günstigerweise ist der beim Glattwalzen auf die Kerbe ausgeübte Druck deutlich kleiner als der Druck beim Festwalzen. Besonders bevorzugt ist es, beim Glattwalzen alle Bahnen der Kerbe gleichzeitig zu erfassen, so daß das Glattwalzen mit einem einzigen Ansetzen der hierfür bestimmten Rolle bewerkstelligt wird. Gegebenenfalls kann diese Rolle mehrfach über die Kerbe geführt werden. Auf alle Fälle kann im Anschluß an das erfindungsgemäße Festwalzen mit einfachen Mitteln und wenig Aufwand eine glatte Oberfläche der Kerbe erreicht werden.

Das Verfahren jedweder Ausgestaltung ist besonders geeignet zum Festwalzen einer Kerbe in einem aus Metall bestehenden Bauteil, insbesondere in einem Bauteil, das aus Stahl, beispielsweise Chromstahl, besteht. Als Chromstahl kommt dabei insbesondere der Stahl X20Cr13 in Frage; dieser Stahl wird insbesondere für Turbinenschaufeln vielfach verwendet. Andere Metalle, aus denen die erfindungsgemäß zu behandelnden Bauteile bestehen können, sind Titan und Titanlegierungen. Besonders wichtig ist die Anwendung des erfindungsgemäßen Verfahrens an einem Bauteil aus hochfestem Werkstoff, insbesondere hochfestem Stahl oder hochfester Titanlegierung.

Wie bereits erwähnt, ist das erfindungsgemäße Verfahren besonders geeignet für eine Turbinenschaufel, wobei die Kerbe insbesondere eine Haltenut ist. Vor allem an einer Turbinenschaufel wird das Verfahren mit besonderem Vorteil in der Weise benutzt, daß zwei einander gegenüberliegende Haltenuten gleichzeitig festgewalzt werden. Damit verbunden ist eine Arbeitsersparnis, da zwei Kerben gleichzeitig behandelt werden, und eine apparative Ersparnis, da zwei Rollen, jeweils eine für jede Haltenut, sich gegeneinander abstützen und besondere Abstützeinrichtungen entbehrlich machen. Außerdem wird eine gewisse Symmetrie der in den gleichzeig festgewalzten Haltenuten erzeugten Druckeigenspannungen erreicht, was dem Ziel der Erzeugung einer Resistenz gegen Rißwachstum und Schwingungsrißkorrosion weiter entgegenkommt.

Ausführungsbeispiele der Erfindung gehen aus der Zeichnung hervor. Dort zeigen im einzelnen:
- FIG 1: eine Anordnung mit einem Bauteil mit festzuwalzenden Kerben sowie Rollen zum Fest- bzw. Glattwalzen;
- FIG 2: einen Vergleich des Querschnitts einer Kerbe vor und nach dem Festwalzen;
- FIG 3: eine Turbinenschaufel;
- FIG 4: eine Anordnung zum Festwalzen einer Kerbe an einer Turbinenschaufel;
- FIG 5: eine Anordnung ähnlich der in Figur 1 gezeigten;
- FIG 6: ein Diagramm der in der Anordnung gemäß Figur 5 erfindungsgemäß erzeugten Druckeigenspannungen;
- FIG 7: ein Diagramm mit in der Anordnung gemäß Figur 5 nach dem Stand der Technik erzeugten Druckeigenspannungen.

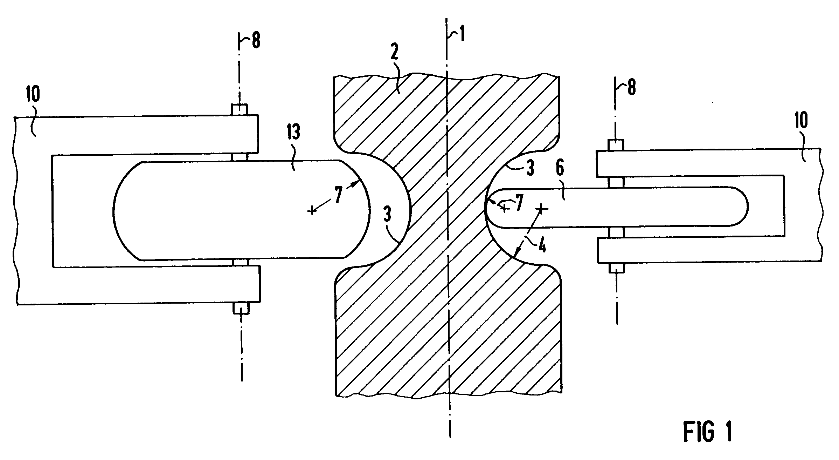

Figur 1 zeigt ein Bauteil 2, welches entlang einer Belastungsachse 1 belastbar sein soll und welches zwei Kerben 3 aufweist, die quer zu der Belastungsachse 1, also aus der Zeichenebene heraus bzw. in die Zeichenebene hinein, erstreckt sein sollen; zu sehen ist mithin ein zu der Belastungsachse 1 paralleler, insbesondere radial-axialer Querschnitt. Jede Kerbe 3 hat einen minimalen Krümmungsradius 4, welcher im dargestellten Beispiel einfach dem Krümmungsradius der im Querschnitt kreisförmigen Kerben 3 entspricht. Die rechts gezeigte Kerbe 3 wird mittels einer entsprechenden Rolle 6 im Sinne der Erfindung festgewalzt; diese Rolle 6 ist ballig, also an ihrem Außenumfang abgerundet, und hat einen maximalen Balligkeitsradius 7, der, da die Rolle 6 ein Torusprofil hat, im dargestellten Beispiel einfach dem Krümmungsradius der Rolle 6 entspricht. Er ist bedeutend kleiner als der minimale Krümmungsradius 4 der Kerbe 3; daher ist zum vollständigen Festwalzen der Kerbe 3, zumindest zum Festwalzen an allen hierfür in Frage kommenden Stellen der Kerbe 3, ein mehrfaches Überrollen mit der Rolle 6 erforderlich. Die Halterung 10, in der die Rolle 6 gehaltert ist, kann zu diesem Zweck beispielsweise eine Einrichtung zum Vorschub entlang der Belastungsachse 1 beinhalten. Die Rolle 6 ist drehbar um eine Drehachse 8. Auf der linken Seite dargestellt ist zum Vergleich eine Rolle 13 mit einem maximalen Balligkeitsradius 7, der etwa dem minimalen Krümmungsradius 4 der Kerbe 3 entspricht, und mit der die Kerbe 3 nach erfolgtem Festwalzen einem Glattwalzen unterzogen werden kann. Dieses Glattwalzen dient insbesondere zum Glätten der Oberfläche der Kerbe 3, was zur weiteren Verbesserung der Qualität wichtig sein kann. Die Rolle 13 ist ebenfalls um eine Drehachse 8 drehbar, und sie ist ebenfalls in einer zugehörigen Halterung 10 befestigt. Nach dem Stand der Technik kann die Rolle 13 gegebenenfalls auch zum Festwalzen verwendet werden.

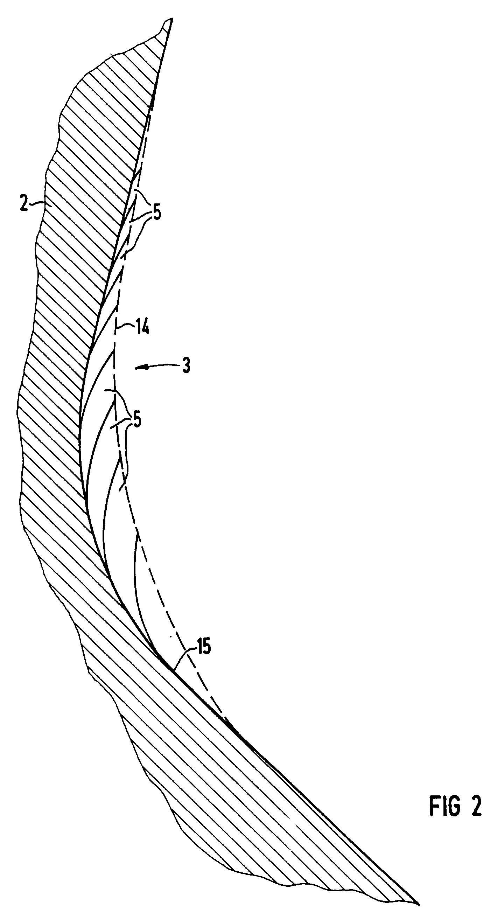

Figur 2 zeigt in entsprechender Vergrößerung die Formveränderung, die eine Kerbe 3 in einem Bauteil 2 durch Festwalzen erfährt. Vor dem Festwalzen hat die Kerbe 3 eine durch eine gestrichelte Linie angedeutete Anfangskontur 14, welche im Laufe des Festwalzens umgeformt wird zu der die schraffierte Fläche begrenzenden Endkontur 15. Das Festwalzen erfolgt, indem eine (nicht dargestellte) Rolle 6 die Kerbe 3 auf vielen nebeneinanderliegenden, einander teilweise überlappenden Bahnen 5 überrollt. Das Überrollen der Kerbe 3 bewirkt stets eine bestimmte Formveränderung; alle beim Festwalzen bewirkten Formveränderungen sind in Figur 2 dargestellt. Die Formveränderungen bedingen einerseits eine gewisse Aufhärtung der verformten Oberfläche und andererseits die Ausbildung von Druckeigenspannungen unter der verformten Oberfläche. Durch das Festwalzen über viele nebeneinanderliegende Bahnen 5 kann eine besonders günstige Verteilung und Ausrichtung der Druckeigenspannungen erzielt werden, was nachfolgend noch näher erläutert wird. Wie auch aus Figur 2 erkennbar, kann die Verformung der Kerbe 3 von Bahn 5 zu Bahn 5 verschieden sein, wozu insbesondere die Kraft, mit der die Rolle 6 (vgl. Figur 1) auf die Kerbe 3 aufgedrückt wird, variiert werden kann. Mit dieser Maßnahme können sowohl die Form der Endkontur 15 als auch die Verteilung von Härte und Druckeigenspannungen feinfühlig den gestellten Anforderungen, insbesondere den im Sinne der Erfindung zu stellenden Anforderungen, angepaßt werden.

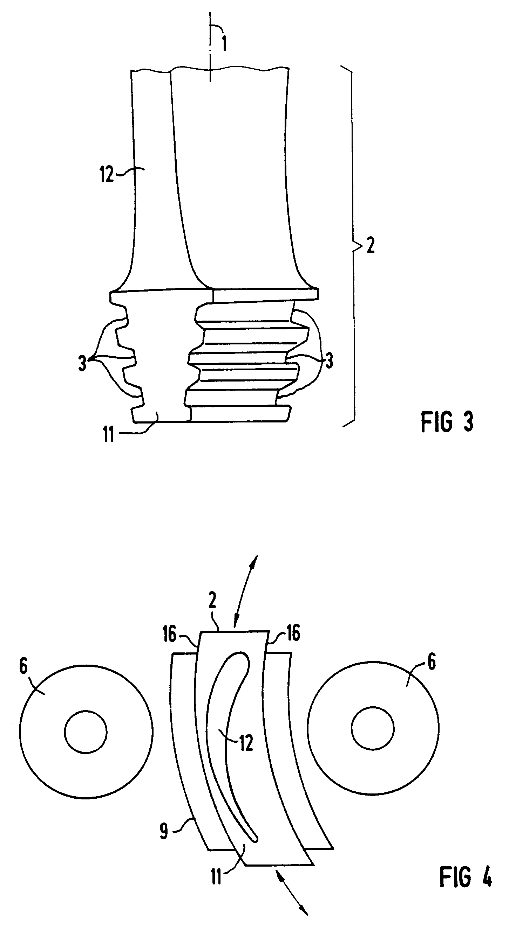

Figur 3 zeigt eine Turbinenschaufel 2 mit einem (nur teilweise dargestellten) Blatt 12, an dem im Betrieb ein Strömungsmittel vorbeiströmt, und einem Fußteil 11, welcher in einem Rotor einer Turbine zu verankern ist. Hierzu hat der Fußteil 11 Kerben 3, die als Haltenuten dienen und in die entsprechende komplementäre Teile eingreifen. Besonders diese Kerben 3 kommen in Frage, um in der beschriebenen Weise festgewalzt zu werden. Die Belastungsachse 1 verläuft in Längsrichtung des Blattes 12, und die Haltenuten 3 sind etwa senkrecht zur Belastungsachse 1 ausgerichtet.

Figur 4 zeigt, entlang der Belastungsachse 1 gesehen, wie eine Turbinenschaufel 2 mit einem Fußteil 11 und einem Blatt 12 in den (nicht sichtbaren) Haltenuten 3 festgewalzt werden kann. Der Fußteil 11 ist hierzu in einer Halterung 9 eingespannt. Der Fußteil 11 hat senkrecht zur Belastungsachse 1 eine Kontur mit zwei gebogenen Seiten 16, in denen sich auch die Kerben 3 befinden. Solche gebogenen Seiten 16 werden gelegentlich bei Turbinenschaufeln 2 verwendet, die für Endstufen von Niederdruck-Dampfturbinen bestimmt sind. Diese Turbinenschaufeln 2 sind im Betrieb besonders hohen mechanischen Belastungen unterworfen, welche durch derartige gebogene Seiten 16 besonders gut aufgefangen werden können. Zum Festwalzen werden die einander gegenüberliegenden Rollen 6 gleichzeitig in die gebogenen Seiten 16 eingedrückt, wofür entsprechende Halterungen nebst Einrichtungen zur Erzeugung der notwendigen Kräfte vorzusehen sind. Die Turbinenschaufel 2 wird entlang der Pfeile zwischen den beiden Rollen 6 hindurchgeschwenkt. Die Rollen 6 stützen sich auf diese Weise aneinander ab, und es können besondere Stützeinrichtungen für die Turbinenschaufel 2 entfallen.

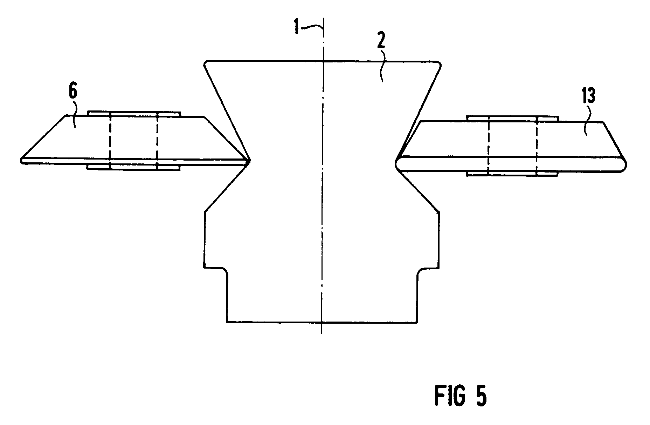

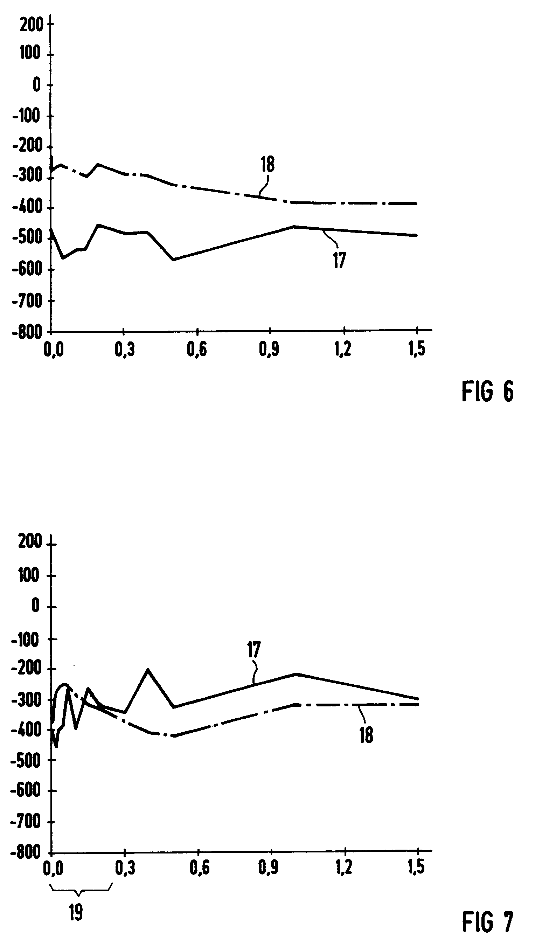

Figur 5 zeigt eine Anordnung ähnlich der aus Figur 1 erkennbaren Anordnung, wobei das Bauteil 2 ein einer Turbinenschaufel nachgebildeter Prüfling ist; der Verlauf der Belastungsachse 1 ist angedeutet. Auf der linken Seite wird der Prüfling überrollt von einer Rolle 6, die mit einem relativ kleinen Krümmungsradius auf das Bauteil 2 einwirkt und dementsprechend bestimmt ist für das erfindungsgemäße Festwalzen. Auf der rechten Seite wird das Bauteil 2 überrollt von einer Rolle 13 mit bedeutend größerem maximalem Balligkeitsradius, die dementsprechend zum Glattwalzen dienen kann oder, wie in Zusammenhang mit der nachfolgend beschriebenen Figur 7, zur Darstellung dessen, was mit Festwalzverfahren des Standes der Technik bisher erreichbar war. Das Bauteil 2 besteht aus dem Werkstoff X20Cr13 und wird für die nachfolgend beschriebenen Beispiele überrollt von einer Rolle 6, die mit einem torusartigen Bereich mit einem Radius von 1,5 mm, der somit dem maximalen Balligkeitsradius entspricht, auf das Bauteil 2 einwirkt und einen Durchmesser von 138,5 mm hat. Das Bauteil 2 wird überrollt auf elf Bahnen, deren Mitten um 0,5 mm voneinander beabstandet sind. Die Kraft, mit der die Rolle 6 auf das Bauteil 2 gedrückt wird, variiert von Bahn zu Bahn zwischen 2,8 kN und 25kN, entsprechend jeweils einem auf das Bauteil 2 ausgeübten Druck zwischen 14 bar und 125 bar. Zum Vergleich wird das Bauteil auf der rechten Seite überrollt mit einer Rolle 13, die mit einem torusartigen Bereich mit einem Krümmungsradius von 3,8 mm auf das Bauteil 2 einwirkt. Bei sechs Überrollungen wurden jeweils zweimal Kräfte von 10 kN, 20 kN und 30 kN ausgeübt. Der Durchmesser der Rolle 13 beträgt ebenfalls 138,5 mm.

Figur 6 zeigt die mit dem erfindungsgemäßen Verfahren in dem Bauteil 2 erzeugten Druckeigenspannungen 17, 18, aufgetragen über die Tiefe (gemessen von der Endkontur aus). Deutlich erkennbar ist, daß bis zu einer Tiefe von 1,5 mm und darüber hinaus die axialen Komponenten 17 deutlich größere Beträge haben als die tangentialen Komponenten 18. Bis zu einer Tiefe von 0,6 mm sind die axialen Komponenten 17 um etwa 50 % größer als die tangentialen Komponenten 18, und dabei haben die axialen Komponenten bis zu einer Tiefe von 1,5 mm Beträge von etwa 500 N/mm². Die Angabe der Druckeigenspannungen in Figur 6 erfolgt als negative Werte; positive Werte auf der Ordinate würden Zugeigenspannungen entsprechen.

Figur 7 zeigt zum Vergleich Druckeigenspannungen 17, 18, die (vgl. Figur 5) mit der Rolle 13 erzeugt wurden. Außerhalb eines kleinen Oberflächenbereichs 19, der von der Oberfläche bis zu einer Tiefe von etwa 0,2 mm erstreckt ist, sind die Beträge der axialen Komponenten 17 stets kleiner als die Beträge der tangentialen Komponenten 18 der Druckeigenspannungen. Im Oberflächenbereich 19 sind die axialen Komponenten 17 darüber hinaus erheblichen Schwankungen unterworfen, so daß dort von einer systematischen Tendenz nicht gesprochen werden kann. Die wesentlichen Eigenschaften des erfindungsgemäßen Verfahrens ergeben sich in großer Deutlichkeit insbesondere aus dem Vergleich der Figuren 6 und 7. Demnach ist es mit der Erfindung erstmals möglich, die Richtung und, wie der Vergleich deutlich zeigt, auch den Betrag der Druckeigenspannungen in dem Bauteil 2 durch entsprechende Ausgestaltung des Festwalzens zu beeinflussen und Größen sowie Richtungen zu erhalten, die den zu erwartenden Belastungen des Bauteils 2 in besonderer Weise angepaßt sind.

## Patentansprüche

1. Verfahren zum Festwalzen eines entlang einer Belastungsachse (1) zu belastenden Bauteils (2) in einer etwa senkrecht zu der Belastungsachse (1) verlaufenden Kerbe (3), wobei die Kerbe (3) über mehrere, entlang der Belastungsachse (1) nebeneinanderliegende und etwa senkrecht zu der Belastungsachse (1) ausgerichtete Bahnen (5) festgewalzt wird, wobei jede Bahn (5) die Kerbe (3) nur zu einem Teil erfaßt und wobei in dem Bauteil (2) unterhalb der Kerbe (3) Druckeigenspannungen erzeugt werden,
**dadurch gekennzeichnet,** daß benachbarte Bahnen (5) einander überlappend durch Aufprägen einer entsprechenden Kraft derart festgewalzt werden, daß Druckeigenspannungen erzeugt werden, die bezuglich der Belastungsachse (1) axiale Komponenten (17) und tangentiale Komponenten (18) haben, wobei die axialen Komponenten (17) wesentlich größer als die tangentialen Komponenten (18) sind.

2. Verfahren nach Anspruch 1, bei dem das Festwalzen mit einer solchen Kraft erfolgt, daß die axialen Komponenten (17) in dem Bauteil (2) bis in eine Tiefe von 0,6 mm unterhalb der Kerbe (3) etwa 50 % größer als die tangentialen Komponenten (18) sind.

3. Verfahren nach Anspruch 1 oder 2, bei dem das Festwalzen mit einer solchen Kraft erfolgt, daß die axialen Komponenten (17) in dem Bauteil (2) bis in eine Tiefe von 1,5 mm unterhalb der Kerbe (3) Beträge von etwa 500 N/mm² haben.

4. Verfahren nach einem der vorhergehenden Ansprüche, bei dem jede Bahn (5) die Kerbe (3) zu höchstens einem Sechstel erfaßt.

5. Verfahren nach einem der vorhergehenden Ansprüche, bei dem jede Bahn (5) überrollt wird mit einer balligen Rolle (6), die einen maximalen Balligkeitsradius (7) hat, der wesentlich kleiner ist als ein minimaler Krümmungsradius (4) der Kerbe (3), welcher in einem zu der Belastungsachse (1) parallelen Querschnitt zu bestimmen ist.

6. Verfahren nach einem der vorhergehenden Ansprüche, bei dem die Kerbe (3) nach dem Festwalzen glattgewalzt wird.

7. Verfahren nach Anspruch 6, bei dem die Kerbe (3) glattgewalzt wird mit einer Rolle (13), welche eine Mehrzahl von Bahnen (5), insbesondere alle Bahnen (5), gleichzeitig erfaßt.

8. Verfahren nach einem der vorhergehenden Ansprüche, bei dem das Bauteil (2) aus einem Metall, insbesondere Stahl, Titan oder Titanlegierung, besteht.

9. Verfahren nach einem der vorhergehenden Ansprüche, bei dem das Bauteil (2) eine Turbinenschaufel ist.

10. Verfahren nach Anspruch 9, bei dem die Kerbe (3) eine Haltenut an der Turbinenschaufel (2) ist.

11. Verfahren nach Anspruch 10, bei dem die Turbinenschaufel (2) zwei einander gegenüberliegende Haltenuten (3) aufweist, in welchen sie gleichzeitig festgewalzt wird.

## Claims

1. Method for work-hardening a component (2), which has to be loaded along a loading axis (1), by rolling in a notch (3) extending approximately at right angles to the loading axis (1), the notch (3) being work-hardened by rolling along a plurality of tracks (5) adjacent to one another along the loading axis (1) and directed approximately at right angles to the loading axis (1), each track (5) covering only a part of the notch (3) and compressive internal stresses being generated in the component (2) below the notch (3), characterized in that adjacent tracks (5) which overlap one another are work-hardened by rolling, by application of an appropriate force such that compressive internal stresses are generated, which stresses have axial components (17) and tangential components (18) relative to the loading axis (1), the axial components (17) being substantially larger than the tangential components (18).

2. Method according to Claim 1, in which the work-hardening by rolling takes place at such a force that the axial components (17) in the component (2) are approximately 50% larger than the tangential components (18) down to a depth of 0.6 mm below the notch (3).

3. Method according to Claim 1 or 2, in which the work-hardening by rolling takes place at such a force that the axial components (17) in the component (2) have magnitudes of approximately 500 N/mm² down to a depth of 1.5 mm below the notch (3).

4. Method according to one of the preceding claims, in which each track (5) covers a maximum of one-sixth of the notch (3).

5. Method according to one of the preceding claims in which each track (5) is rolled over by a crowned roller (6) which has a maximum crown radius (7) which is substantially smaller than a minimum radius of curvature (4) of the notch (3) which has to be determined in a cross-section parallel to the loading axis (1).

6. Method according to one of the preceding claims, in which the notch (3) is finish-rolled after the work-hardening by rolling.

7. Method according to Claim 6, in which the notch (3) is finish-rolled with a roller (13) which simultaneously covers a plurality of tracks (5), in particular all the tracks (5).

8. Method according to one of the preceding claims, in which the component (2) consists of a metal, in particular steel, titanium or titanium alloy.

9. Method according to one of the preceding claims, in which the component (2) is a turbine blade.

10. Method according to Claim 9, in which the notch (3) is a retention groove on the turbine blade (2).

11. Method according to Claim 10, in which the turbine blade (2) has two mutually opposite retention grooves (3) in which work-hardening by rolling takes place simultaneously.

## Revendications

1. Procédé destiné à l'écrouissage d'un élément (2) devant être sollicite le long d'un axe de sollicitation (1) dans une encoche (3) s'étendant sensiblement perpendiculairement à l'axe de sollicitation (1), l'encoche (3) étant écrouie par l'intermédiaire de plusieurs sections (5) situées les unes à côté des autres le long de l'axe de sollicitation (1) et orientées sensiblement perpendiculairement à l'axe de sollicitation (1), chaque section (5) ne portant que sur une partie de l'encoche (3), et des contraintes internes de compression étant engendrées dans l'élément (2) au-dessous de l'encoche (3)
caractérisé en ce que des sections (5) voisines se chevauchant sont écrouies par l'application d'une force correspondante de telle sorte que des contraintes internes de compression soient engendrées qui, par rapport à l'axe de sollicitation (1), ont des composantes axiales (17) et des composantes tangentielles (18), les composantes axiales (17) étant nettement plus importantes que les composantes tangentielles (18).

2. Procédé selon la revendication 1, dans lequel l'écrouissage est effectué avec une force telle que, jusqu'à une profondeur de 0,6 mm au-dessous de l'encoche (3), les composantes axiales (17) dans l'élément (2) sont d'environ 50 % supérieures aux composantes tangentielles (18).

3. Procédé selon la revendication 1 ou 2, dans lequel l'écrouissage est effectué avec une force telle que, jusqu'à une profondeur de 1,5 mm au-dessous de l'encoche (3), les composantes axiales (17) dans l'élément (2) ont des valeurs de l'ordre de 500 N/mm².

4. Procédé selon l'une quelconque des revendications précédentes, dans lequel chaque section (5) couvre au plus un sixième de l'encoche (3)

5. Procédé selon l'une quelconque des revendications précédentes, dans lequel un galet convexe (6) passe sur chaque section (5), lequel a un rayon de convexité maximal (7) nettement inférieur à un rayon de courbure minimal (4) de l'encoche (3) qui est à définir dans une section transversale parallèle à l'axe de sollicitation (1).

6. Procédé selon l'une quelconque des revendications précédentes, dans lequel l'encoche (3) est lissée par cylindrage après l'écrouissage.

7. Procédé selon la revendication 6, dans lequel l'encoche (3) est lissée par cylindrage avec un galet (13) qui couvre simultanément plusieurs sections (5), notamment toutes les sections (5).

8. Procédé selon l'une quelconque des revendications précédentes, dans lequel l'élément (2) est constitué d'un métal, notamment d'acier, de titane ou d'alliage de titane.

9. Procédé selon l'une quelconque des revendications précédentes, dans lequel l'élément (2) est une aube de turbine.

10. Procédé selon la revendication 9, dans lequel l'encoche (3) est une rainure de retenue sur l'aube (2) de turbine.

11. Procédé selon la revendication 10, dans lequel l'aube (2) de turbine comporte deux rainures de retenue (3) situées l'une en face de l'autre, dans lesquelles elle est simultanément écrouie.
